# EUROPEAN PATENT SPECIFICATION

(11) **EP 1 728 544 B1**
(45) Date of publication and mention of the grant of the patent: **25.12.2013**
(21) Application number: 05727066.2
(22) Date of filing: 23.03.2005
(51) Int. Cl.: C04B 28/24, C04B 35/565, C04B 35/626, C04B 35/80, B01D 39/20, C04B 38/00, F01N 3/28, C04B 111/00

(54) **HONEYCOMB STRUCTURE AND METHOD FOR MANUFACTURING THE SAME**
WABENSTRUKTUR UND HERSTELLUNGSVERFAHREN DAFÜR
STRUCTURE ALVEOLAIRE ET PROCEDE DE FABRICATION DE LADITE STRUCTURE

(30) Priority: 23.03.2004 JP 2004085529
(43) Date of publication of application: 06.12.2006
(73) Proprietor: NGK Insulators, Ltd., Nagoya-shi, Aichi 467-8530 (JP)
(72) Inventor: MASUKAWA, Naoshi, Nagoya-shi, Aichi 4678530 (JP); ICHIKAWA, Shuichi, Nagoya-shi, Aichi 4678530 (JP)
(74) Representative: Paget, Hugh Charles Edward
(86) International application number: PCT/JP2005/005208
(87) International publication number: WO 2005/089901

(56) References cited:
- EP-A- 0 816 065
- JP-A- 8 028 246
- JP-A- 2002 273 137
- JP-A- 2003 117 322

## Description

### Technical Field

The present invention relates to a honeycomb structure in which a plurality of honeycomb segments are bonded, more particularly to a honeycomb structure in which honeycomb segments are bonded with a large bonding force and which is superior in thermal shock resistance.

### Background Art

This type of honeycomb structure has an application as a trapping filter such as a diesel particulate filter (DPF). There is also an application as an exhaust gas purifying catalyst carrier. The DPF is incorporated in an exhaust system of a diesel engine as a filter which traps particulates contained in an exhaust gas from a diesel engine or the like to remove the particulates. The exhaust gas purifying catalyst carrier carries a catalyst for purifying, for example, nitrogen oxide, hydrocarbon, and carbon monoxide in the exhaust gas from a gasoline engine and is incorporated in the exhaust system.

In general, the trapping filter is not of a bonded type in which a plurality of honeycomb segments are bonded in parallel, and is integrally constituted. However, when the filter is used as a DPF, the bonded type is preferably used in order to secure thermal shock resistance. Also when the filter is used as a catalyst carrier, the bonded type can be used in a large-sized type.

The honeycomb structure for the DPF is usually structured by bonding a plurality of porous honeycomb segments made of silicon carbide or the like by means of a bonding material, forming a structure into a predetermined shape such as a circular sectional shape, and coating periphery with a coating material. Each honeycomb segment has a large number of cells (through channels). The respective cells are partitioned by porous partition walls and extend in an axial direction. End portions of the cells are alternately plugged. That is, one end portion of a certain cell is opened, whereas the other end portion of the cell is plugged. As to another cell adjacent to the cell, one end portion is plugged, but the other end portion is opened.

According to such structure, when the exhaust gas flows into the cell from the opened end portion, the exhaust gas passes through the porous partition wall to flow out of another cell, and the particulates in the exhaust gas are trapped in the partition walls during the passing of the gas through the partition walls. Therefore, the exhaust gas can be purified. In the honeycomb structure for the DPF, the partition walls carry the catalysts in order to promote calcinating and removing of the trapped particulates in many cases. On the other hand, in the catalyst carrier, the cells are not plugged, and the catalysts are carried by the partition walls to purify the exhaust gas.

In Japanese Patent No. 3121497, as bonding materials for bonding the honeycomb segments, there are described materials to which inorganic fibers or inorganic particles have been added in addition to an organic binder or an inorganic binder.

When a catalyst is carried by such a honeycomb structure, a catalyst such as a platinum metal and an alkaline earth metal is calcinated on the honeycomb structure. The catalysts are calcinated by performing a heat treatment at about 400 to 600°C after immersing the honeycomb structure into catalyst slurry, spraying catalyst slurry onto the honeycomb structure, or sucking catalyst slurry to pass the slurry through the honeycomb structure.

[Patent Document 1] JP-B-3121497

### Disclosure of the Invention

After calcinating the catalyst onto the honeycomb structure, the honeycomb structure is cooled. During the cooling, cracks are sometimes generated. Moreover, there is a problem that, when such cracks are generated, the honeycomb structure cannot function as a filter or a catalyst carrier.

As to such generation of the cracks, the honeycomb structure is distorted owing to a temperature difference between an outer peripheral portion and an inner peripheral portion of the honeycomb structure when the outer peripheral portion of the honeycomb structure is cooled in a temperature drop step after the calcinating. A difference in rigidity or thermal expansion coefficient between a honeycomb segment and a bonding layer generates especially large stress to peel or displace the honeycomb segment and the bonding layer from each other in a bonded portion. When this stress exceeds strength of the bonded portion, the cracks are generated.

The present invention has been developed in consideration of such a conventional problem and aims to provide a honeycomb structure capable of inhibiting cracks from being generated during calcinating of a catalyst, and a method of manufacturing the structure.

According to the present invention, there is provided a honeycomb structure comprising a plurality of honeycomb segments having a plurality of cells partitioned by porous partition walls and functioning as fluid channels and outer walls the honeycomb segments being bonded to one another by means of a bonding material containing a ceramic as a main component, wherein a three-point bending strength of a bonding layer formed of the bonding material is 5 MPa or more, and a shearing strength of a bonded portion including the bonding layer and the outer walls sandwiching this bonding layer therebetween is 1 MPa or more.

In the present invention, the bonding material contains inorganic particles, an oxide fiber, and a colloidal oxide. The bonding material also preferably contains a foamed resin.

Moreover, according to the present invention, there is provided a method of manufacturing a honeycomb structure comprising a plurality of honeycomb segments having a plurality of cells partitioned by porous partition walls and functioning as fluid channels, the honeycomb segments bonded to one another by means of a bonding material containing a ceramic as a main component, wherein a heat treatment at a temperature of 400 to 1200°C is performed in a state that the plurality of honeycomb segments are bonded by means of the bonding material.

In the honeycomb structure according to the present invention, since the three-point bending strength of the bonding layer of the honeycomb segment is 5 MPa or more, and the shearing strength of the bonded portion including the bonding layer and the outer walls sandwiching this layer therebetween is 1 MPa or more, thermal shock resistance is high, and cracks are inhibited from being generated in the bonded portion of the honeycomb segment. According to the method of manufacturing the honeycomb structure of the present invention, such honeycomb structure having high thermal shock resistance can easily be manufactured.

### Brief Description of the Drawings

Fig. 1 is a perspective view showing an embodiment of a honeycomb structure of the present invention;
Fig. 2 is a sectional view of a honeycomb segment along the line A-A of Fig. 3;
Fig. 3 is a perspective view of a honeycomb segment;
Fig. 4 is an end face view of a honeycomb structure; and
Fig. 5 is a schematic diagram showing a method of measuring shearing strength.

### [Description of Reference Numerals]

1: Honeycomb structure
2: Honeycomb segment
5: Cell
6: Partition wall
7: Plugging material
9: Bonding layer
10: Shearing strength measuring jig

### Best Mode for Carrying out the Invention

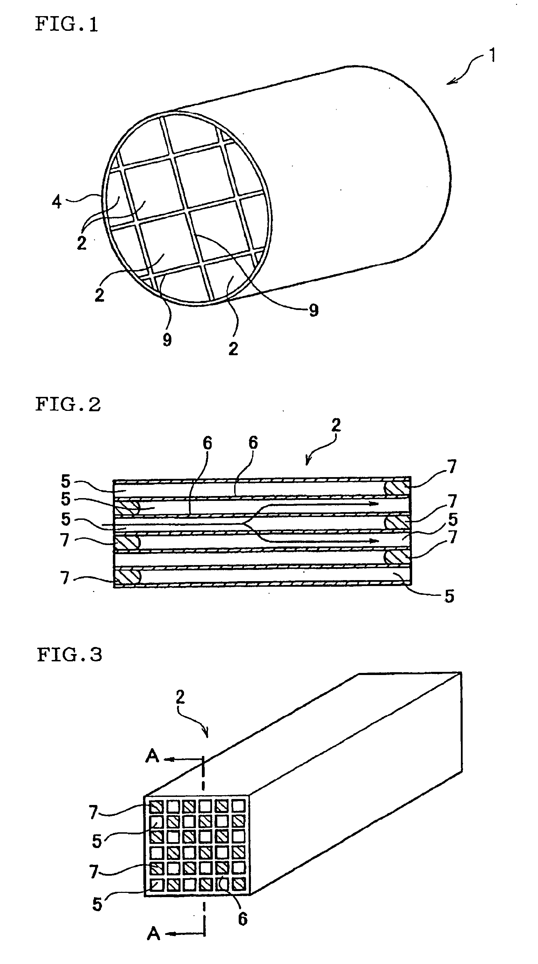

Fig. 1 is a schematic perspective view showing an embodiment of a honeycomb structure 1 of the present invention. The honeycomb structure 1 is formed by bonding a plurality of honeycomb segments 2 by means of bonding layers 9 formed of bonding materials. After bonding the honeycomb segments 2 by means of the bonding materials, the segments are ground to have a section such as a circular section, an elliptic section, or a triangular section, and an outer peripheral surface is coated with a coating material 4.

In a case where this honeycomb structure 1 is used as a DPF, when the structure is disposed in a channel of an exhaust gas from a diesel engine, it is possible to trap particulates containing soot discharged from the diesel engine.

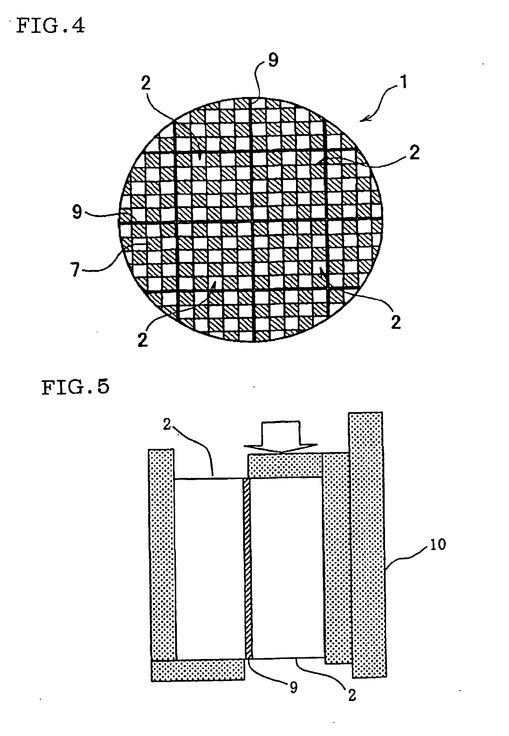

As shown in Figs. 2 and 3, each honeycomb segment 2 has a large number of cells (through channels) 5 partitioned by porous partition walls 6. The cells 5 extend through the honeycomb segment 2 in an axial direction, and end portions of adjacent cells 5 on one side are alternately plugged by plugging materials 7. That is, in one cell 5, a left end portion is opened, whereas a right end portion is plugged with the plugging material 7. In another cell 5 adjacent to this cell, the left end portion is plugged with the plugging material 7, whereas the right end portion is opened. Since the cells are plugged in this manner, each end face of the honeycomb segment 2 exhibits a checkered pattern as shown in Fig. 4.

When the honeycomb structure 1 with such honeycomb segments 2 assembled is disposed in the channel of the exhaust gas, the exhaust gas flows into the cells 5 of each honeycomb segment 2 from a left side, and moves to a right side. That is, in Fig. 2, the left side of the honeycomb segment 2 constitutes an inlet of the exhaust gas, and the exhaust gas flows into the honeycomb segment 2 from the cells 5 opened without being plugged with the plugging materials 7. The exhaust gas which has flown into the cells 5 passes through the porous partition walls 6 to flow out of the other cells. When the exhaust gas passes through the partition walls 6, soot containing particulates in the exhaust gas is trapped by the partition walls 6. Therefore, the exhaust gas can be purified.

It is to be noted that, though the shown honeycomb segment 2 has a square section, the segment may have an appropriate sectional shape such as a triangular section or a hexagonal section. The cell 5 can have a sectional shape such as a triangular shape, a hexagonal shape, a circular shape, an elliptical shape, or another shape. Moreover, the cells do not have to be plugged every other cell, and predetermined cells may be plugged. Therefore, the checkered pattern shown in Fig. 4 does not have to be exhibited.

As a material of the honeycomb segment 2, from the viewpoints of strength and heat resistance, it is preferable to use one kind selected from the group consisting of silicon carbide, a silicon-silicon carbide based composite material, silicon nitride, cordierite, mullite, alumina, spinel, a silicon carbide-cordierite-based composite material, a silicon-silicon carbide composite material, lithium aluminum silicate, aluminum titanate, and an Fe-Cr-Al-based metal, or a combination thereof. Among them, silicon carbide or the silicon-silicon carbide based composite is especially preferably used.

As the plugging material 7, a material similar to that of the honeycomb segment 2 may be used. For example, a ceramic selected from the group consisting of silicon carbide, silicon nitride, cordierite, alumina, mullite, zirconia, zirconium phosphate, aluminum titanate, titania, silica and combinations thereof, a nickel-based metal, or metallic Si-SiC can preferably be used.

By applying a bonding material to an outer surface of each honeycomb segment 2, the honeycomb segments 2 are bonded. The bonding material may be applied to the outer surfaces of the respective adjacent honeycomb segments 2, or to one of facing outer surfaces of the adjacent honeycomb segments 2. The application to only one of the facing surfaces is preferable in that a use amount of the bonding material can preferably be saved.

In manufacturing the honeycomb segment 2, a binder such as methyl cellulose, hydroxypropoxyl cellulose, hydroxyethyl cellulose, carboxymethyl cellulose, polyvinyl alcohol, or the like, surfactant, water and the like are added to the selected material to form puddle having plasticity. The puddle is extruded and formed into a honeycomb shape having a large number of cells 5 partitioned by the partition walls 6 and extending through the shape in an axial direction.

This honeycomb-shaped formed body is plugged with the plugging material 7. The plugging can be conducted by masking cells that are not to be plugged, and immersing an end face of the honeycomb segment 2 in a slurry-state plugging material to fill the open cells 5. From a viewpoint of simplification of steps, the plugging is preferably performed before firing the honeycomb segment 2 as described later.

After the plugging with the plugging material 7, the article is dried with hot air or the like and then sintered at a high temperature to form the honeycomb segment 2.

After the honeycomb segment 2 is prepared as described above, a slurry-state bonding material is applied to the outer surface of the honeycomb segment 2, and a plurality of honeycomb segments 2 are assembled so as to obtain a predetermined three-dimensional shape. After the assembled segments are attached to one another under pressure, they are heated and dried. Accordingly, a bonded body is prepared in which the plurality of honeycomb segments 2 are bonded.

In this case, a three-point bending strength in a formed bonding layer is set to 5 MPa or more, and a shearing strength of a bonded portion including the bonding layer and outer walls sandwiching the layer between opposite sides is set to 1 MPa or more. Since the three-point bending strength of the bonding layer is set to 5 MPa or more, and the shearing strength of the bonded portion is set to 1 MPa or more, strength of the bonded portion increases, and large thermal shock resistance can be imparted. Therefore, cracks can be inhibited from being generated in the bonded portions of the honeycomb segments 2. The bonding material contains inorganic particles, an oxide fiber, and a colloidal oxide.

As for the inorganic particles, for example, a ceramic selected from the group consisting of silicon carbide, silicon nitride, cordierite, alumina, mullite, zirconia, zirconium phosphate, aluminum titanate, titania, and combinations thereof, an Fe-Cr-Al type metal, a nickel-based metal, or metallic Si-SiC can preferably be used.

As the oxide fiber, ceramic fibers such as aluminosilicate, silica, alumina, and mullite can preferably be used.

As the colloidal oxide, for example, silica sol, alumina sol or the like can preferably be used.

Furthermore, a foamed resin is preferably added to the bonding material. When the bonding material contains the foamed resin, it is possible to reduce Young's modulus of the bonding layer 9 formed by curing the bonding material. In addition to this, the bonding material has a satisfactory ductility, wettability of the bonding material and the honeycomb segment 2 is enhanced, and bonding strengths of the honeycomb segments 2 by the bonding layers 9 increase. Consequently, thermal shock resistance properties of the bonded portions of the honeycomb segments 2 are enhanced, and cracks can be inhibited from being generated in the bonded portions. As the foamed resin, for example, an acrylonitrile-based plastic balloon made of an acrylonitrile-methyl methacrylate copolymer or the like can preferably be used.

Furthermore, if necessary, an organic binder may be added to the bonding material. As the organic binder, methyl cellulose, ethyl cellulose, hydroxyethyl cellulose, carboxymethyl cellulose, hydroxypropoxyl methyl cellulose, polyvinyl alcohol or the like can preferably be used.

The bonded body obtained by bonding the plurality of honeycomb segments 2 with the bonding materials is preferably thermally treated by heating. The heat treatment is performed by leaving the bonded body to stand at a high temperature of 400 to 1200°C for about ten minutes. Since the bonding material contains the inorganic particles, the oxide fiber, and the colloidal oxide mentioned above, the strength of the bonding layer 9 itself formed of the bonding material increases by the heat treatment, as well as the bonding strength in the bonded portion of the honeycomb segment 2 increases. This tendency becomes remarkable especially in a case where the colloidal oxide is contained. Since the strength of the bonding layer 9 itself and the bonding strength of the bonded portion of the honeycomb segment 2 increase in this manner, the three-point bending strength of the bonding layer 9 and the shearing strength of the bonded portion can be set to 5 MPa or more and 1 MPa or more, respectively, and the cracks can be inhibited from being generated in the bonded portions of the honeycomb segments 2. It is to be noted that such heat treatment may be performed after the next step of coating outer peripheries of the segments.

After preparing the bonded body of the honeycomb segments 2 in this manner, the bonded body is ground, an outer peripheral surface of the body is coated with the coating material 4, and the body is heated and dried. Thus, the honeycomb structure 1 shown in FIG. 1 can be prepared. In this case, a material similar to the bonding material can be used as the coating material 4.

In a case of loading the catalyst on the honeycomb structure 1 prepared in this manner, the three-point bending strength in the bonding layer of the honeycomb segment 2 is 5 MPa or more, and the shearing strength of the bonded portion is 1 MPa or more. Since the strength of the bonded portion is large, and the thermal shock resistance of the bonded portion increases, any crack is not generated in the bonded portion of the honeycomb segment 2 even when a peeling stress acts owing to a temperature difference between an outer peripheral portion and an inner peripheral portion of the honeycomb structure 1 in a temperature drop step after performing a heat treatment such as calcinating of a catalyst. Consequently, a satisfactory honeycomb structure can be produced as a filter. It is to be noted that the embodiment of the present invention has been described with the example of the DPF. An object of the present invention is to prevent the cracks in the bonded portions, and the present invention can be applied to a honeycomb structure such as a catalyst carrier in which any cell is not plugged in the same manner as in a filter type of honeycomb structure as long as the honeycomb structure is of a bounded type.

### EXAMPLE

As a raw material in this example, SiC powder and metal Si powder was mixed together at a weight ratio of 80:20. To the powder, starch as a pore-forming agent and resin foam were added. Further, to this powder, methyl cellulose, hydroxypropoxyl methyl cellulose, a surfactant, and water were added to prepare puddle having plasticity. This puddle was subjected to extrusion, the extrudate was dried using a microwave and hot air to obtain a honeycomb segment 2 having a partition wall 6 thickness of 310 µm, a cell density of about 46.5 cells/cm² (300 cells/in.²), a square section of 35 mm × 35 mm and a length of 152 mm.

In the honeycomb segment 2, the adjacent cells 5 were sealed with the material similar to that for use in manufacturing the honeycomb segment 2 in one end on the opposite side so that the end surfaces had checkered patterns. After being dried, each honeycomb segment was degreased at about 400°C in the ambient atmosphere, then fired at about 1,450°C in an Ar inert atmosphere to obtain the honeycomb segment 2 of Si-bonded SiC.

On the other hand, SiC powder as inorganic particles, an aluminosilicate fiber as an oxide fiber, an aqueous solution containing 40% by mass of silica gel as a colloidal oxide, clay, and foamed resin were mixed, followed by adding water. The resultant mixture was kneaded using a mixer for 30 minutes to obtain bonding materials A to C having compositions shown in Table 1. It is to be noted that in Table 1 silica gel means an aqueous solution containing 40% by mass of silica gel.

**[Table 1]**

| Bonding materials No. | SiC powder [% by mass] | Aluminosilicate fiber [% by mass] | Silica gel [% by mass] | Foamed resin [% by mass] | Clay [% by mass] | Water [% by mass] |
|---|---|---|---|---|---|---|
| A | 41 | 25 | 23 | 0 | 1 | 10 |
| B | 40 | 24 | 23 | 1 | 1 | 10 |
| C | 45 | 26 | 10 | 0 | 1 | 18 |

Next, the honeycomb segments 2 were bonded using the bonding material shown in Table 1. In the bonding, after bonding a plurality of segments in such a manner that a thickness of the bonding layer 9 was 1 mm, the segments were dried at 200°C for two hours to obtain honeycomb filters (Filters 1 to 3). It is to be noted that Filter 1, Filter 2, and Filter 3 were bonded using Bonding Material A, Bonding Material B, and Bonding Material C, respectively. Filters 1 and 3 were thermally treated at 700°C for ten minutes to obtain Filters 4 and 5. Furthermore, Filter 3 was thermally treated at 300°C for ten minutes to obtain Filter 6.

Ten bonding layers were cut as samples for a strength test from each filter, and each bonding layer was measured for a three-point bending strength according to JIS R1601. Furthermore, a bonded portion including the bonding layer and outer walls on opposite sides of the layer was cut out to measure a shearing strength. To be more specific, as shown in FIG. 5, a bonding layer 9 and honeycomb segments 2 on opposite sides of the layer having predetermined sizes were cut from each filter and set on a shearing strength measurement jig 10. One honeycomb segment 2 was fixed, a load was applied to the other honeycomb segment 2 in the arrow direction by an autograph, a load at a time when the bonded portion was sheared/destroyed was measured, and the shearing strength of the bonded portion was calculated from the value.

Furthermore, as a thermal shock test, an electric furnace spalling test was conducted. In this test, a sample was disposed in an electric furnace at a predetermined temperature, and taken out at room temperature after one hour to observe a crack generated state. In this example, the maximum temperature at which any crack was not generated was set as the limit temperature. Results are shown in Table 2.

**[Table 2]**

| | Filter No. | Bending strength (average) [MPa] | Shearing strength [MPa] | Electric furnace spalling limit temperature [°C] |
|---|---|---|---|---|
| Example 1 | 1 | 5.2 | 1.1 | 550 |
| Example 2 | 2 | 6.1 | 1.4 | 550 |
| Example 3 | 4 | 10.6 | 2.0 | 600 |
| Example 4 | 5 | 7.1 | 1.7 | 550 |
| Comparative Example 1 | 3 | 3.5 | 0.6 | 450 |
| Comparative Example 2 | 6 | 4.2 | 0.8 | 500 |

As seen from the results of Table 2, by setting the three-point bending strength of the bonding layer to 5 MPa or more and the shearing strength of the bonded portion to 1 MPa or more, the limit temperature in the electric furnace spalling test is 550°C or more. It is shown that in a case where a stress generated in the bonded portion in a catalyst calcinating step is calculated, since the stress corresponds to that at 550°C in the electric furnace spalling test, the three-point bending strength of the bonded portion needs to be 5 MPa or more, and the shearing strength needs to be 1 MPa or more. Moreover, when the filter is thermally treated, the strength of the bonded portion can be enhanced, and the thermal shock resistance of the filter can be secured.

### Industrial Applicability

As described above, since the honeycomb structure of the present invention has high thermal shock resistance, the structure can be applied to various applications such as a DPF and a catalyst carrier. The production method of a honeycomb structure of the present invention can preferably be applied to manufacture of such a honeycomb structure having high thermal shock resistance.

## Claims

1. A honeycomb structure (1) comprising a plurality of honeycomb segments (2) having a plurality of cells (5) partitioned by porous partition walls (6) and functioning as fluid channels and outer walls, the honeycomb segments (2) being bonded to one another by means of a bonding material containing a ceramic as a main component and containing inorganic particles, an oxide fiber, and a colloidal oxide,
wherein a three-point bending strength of a bonding layer (9) formed of the bonding material is 5 MPa or more, and a shearing strength of a bonded portion including the bonding layer (9) and the outer walls sandwiching this bonding layer (9) therebetween is 1 MPa or more.

2. The honeycomb structure (1) according to claim 1, wherein the bonding material contains a foamed resin.

3. A method of manufacturing a honeycomb structure (1) comprising a plurality of honeycomb segments (2) having a plurality of cells (5) partitioned by porous partition walls (6) and functioning as fluid channels, the honeycomb segments (2) being bonded to one another by means of a bonding material containing a ceramic as a main component and containing inorganic particles, an oxide fiber, and a colloidal oxide, wherein a heat treatment at a temperature of 400 to 1200°C is performed in a state that the plurality of honeycomb segments (2) are bonded by means of the bonding material, the three-point bending strength of the bonding layer (9) formed of the bonding material being 5 MPa or more, and the shearing strength of a bonded portion including the bonding layer (9) and the outer walls sandwiching the bonding layer (9) therebetween being 1 MPa or more.

## Patentansprüche

1. Wabenstruktur (1), umfassend eine Vielzahl von Wabensegmenten (2), die eine Vielzahl von Zellen (5), die durch poröse Trennwände (6) getrennt sind und als Fluiddurchlässe fungieren und Außenwände aufweisen, wobei die Wabensegmente (2) durch ein Haftmaterial haftschlüssig miteinander verbunden sind, das einen Keramikwerkstoff als Hauptbestandteil umfasst und anorganische Partikel, eine Oxidfaser und ein kolloides Oxid umfasst;
worin die 3-Punkt-Biegefestigkeit einer aus dem Haftmaterial gebildeten Haftschicht (9) 5 MPa oder mehr beträgt, und die Scherfestigkeit eines haftschlüssig verbundenen Abschnitts, der die Haftschicht (9) und die Außenwände, die diese Haftschicht (9) sandwichartig umgeben, umfasst 1 MPa oder mehr beträgt.

2. Wabenstruktur (1) nach Anspruch 1, worin das Haftmaterial ein Schaumharz umfasst.

3. Verfahren zur Herstellung einer Wabenstruktur (1), umfassend eine Vielzahl von Wabensegmenten (2), die eine Vielzahl von Zellen (5) aufweisen, die durch poröse Trennwände (6) getrennt sind und als Fluiddurchlässe fungieren, wobei die Wabensegmente (2) durch ein Haftmaterial haftschlüssig miteinander verbunden sind, das einen Keramikwerkstoff als Hauptbestandteil umfasst und anorganische Partikel, eine Oxidfaser und ein kolloides Oxid umfasst, worin eine Wärmebehandlung bei einer Temperatur von 400 bis 1200 °C in einem Zustand durchgeführt wird, in dem die Vielzahl von Wabensegmenten (2) durch das Haftmaterial haftschlüssig miteinander verbunden werden, wobei die 3-Punkt-Biegefestigkeit der aus dem Haftmaterial gebildeten Haftschicht (9) 5 MPa oder mehr beträgt, und die Scherfestigkeit eines haftschlüssig verbundenen Abschnitts, der die Haftschicht (9) und die Außenwände, die diese Haftschicht (9) sandwichartig umgeben, umfasst 1 MPa oder mehr beträgt.

## Revendications

1. Structure en nid d'abeilles (1) comprenant une pluralité de segments de nid d'abeilles (2) comportant une pluralité de cellules (5) séparées par des parois de séparation poreuses (6) et fonctionnant en tant que canaux de fluide et des parois extérieures, les segments de nid d'abeilles (2) étant liés les uns aux autres au moyen d'un matériau de liaison contenant une céramique en tant que composant principal et contenant des particules inorganiques, une fibre d'oxyde et un oxyde colloïdal,
dans laquelle une résistance à la flexion en trois points d'une couche de liaison (9) constituée du matériau de liaison est de 5 MPa ou plus, et une résistance au cisaillement d'une partie liée comprenant la couche de liaison (9) et les parois extérieures prenant en sandwich cette couche de liaison (9) entre elles est de 1 MPa ou plus.

2. Structure en nid d'abeilles (1) selon la revendication 1, dans laquelle le matériau de liaison contient une résine expansée.

3. Procédé de fabrication d'une structure en nid d'abeilles (1) comprenant une pluralité de segments de nid d'abeilles (2) comportant une pluralité de cellules (5) séparées par des parois de séparation poreuses (6) et fonctionnant en tant que canaux de fluide, les segments de nid d'abeilles (2) étant liés les uns aux autres au moyen d'un matériau de liaison contenant une céramique en tant que composant principal et contenant des particules inorganiques, une fibre d'oxyde et un oxyde colloïdal, dans lequel un traitement thermique à une température de 400 à 1200 °C est effectué dans un état dans lequel la pluralité de segments de nid d'abeilles (2) sont liés au moyen du matériau de liaison, la résistance à la flexion en trois points de la couche de liaison (9) constituée du matériau de liaison étant de 5 MPa ou plus, et la résistance au cisaillement d'une partie liée comprenant la couche de liaison (9) et les parois extérieures prenant en sandwich la couche de liaison (9) entre elles étant de 1 MPa ou plus.
